# EUROPEAN PATENT SPECIFICATION

(11) **EP 2 924 300 B1**
(45) Date of publication and mention of the grant of the patent: **30.05.2018**
(21) Application number: 14161920.5
(22) Date of filing: 27.03.2014
(51) Int. Cl.: F15B 15/16, B66F 3/28, B60P 1/16

(54) **A telescopic hydraulic cylinder and a cover tube of a telescopic hydraulic cylinder**
Teleskopischer Hydraulikzylinder und Deckelrohr eines teleskopischen Hydraulikzylinders
Vérin hydraulique télescopique et tube de revêtement d'un vérin hydraulique télescopique

(43) Date of publication of application: 30.09.2015
(73) Proprietor: Wipro Infrastructure Engineering Oy, 25500 Perniö (FI)
(72) Inventor: Valto, Vesa, 25500 Perniö (FI)
(74) Representative: Kolster Oy Ab

(56) References cited:
- EP-A1- 2 466 156
- US-A1- 2004 154 237

## Description

### FIELD OF THE INVENTION

The present invention relates to the field of telescopic hydraulic cylinders and to the field of load handling and transportation vehicles with load tipping actuated by telescopic hydraulic cylinders, and more particularly to a telescopic hydraulic cylinder and a cover tube of a telescopic hydraulic cylinder.

### BACKGROUND OF THE INVENTION

Hydraulic cylinders are mechanical actuators that are used to give a unidirectional force through a unidirectional stroke. They have many applications in the transportation industry, in construction equipment, in material and load handling within the process and manufacturing industry as well as within the energy industry. Telescopic hydraulic cylinders are a special design of hydraulic cylinders which provide an exceptionally long output travel from a very compact retracted length. Typically the collapsed length of a telescopic hydraulic cylinder is 20 to 40% of the fully extended length depending on the number of stages. One typical application for telescopic hydraulic cylinders commonly seen is that of the dump body on a dump truck used in a construction site.

Telescopic hydraulic cylinders are typically designed with a series of steel tubes of progressively smaller diameters nested within each other. The largest diameter sleeve is often referred to as the main or the barrel, the smaller inner sleeves are called the stages, and the smallest stage may often be called the plunger or the piston rod. The cylinders of a telescopic hydraulic cylinder may be mounted in machinery by pivot mounts welded to the end or outer body of the barrel as well as on the end of the plunger.

Telescopic hydraulic cylinders require careful design as they are subjected to large side forces especially at full extension. The weight of steel bodies and the hydraulic oil contained within the actuator create moment loads on the bearing surfaces between stages. These forces, combined with the load being pushed, threaten to bind or even buckle the telescopic assembly. Side forces and moment loads are typically minimized and telescopic hydraulic cylinders are usually not used to stabilize a structural component.

In prior art there are some telescopic hydraulic cylinder solutions which are providing more stability and strength in the design structure. One such typical telescopic hydraulic cylinder solution is a telescopic hydraulic cylinder having a cover tube. Typically the top part of the cover tube is attached to the smallest inner sleeve i.e. to the plunger of the telescopic hydraulic cylinder and the lower part of the cover tube 1 is fitted to the tipping body. The cover tube provides more stability and strength in the design structure. One problem with the cover tube is that the telescopic hydraulic cylinder structure is subjected to different forces, impacts, tensions, shear strains and stresses, twists and torsions these causing adverse effects. This is especially the case when the telescopic hydraulic cylinder and the cover tube are retracted into the retracted position. In prior art there are some telescopic hydraulic cylinder arrangements trying to minimize the above-mentioned adverse effects resulting from the lifting operation and especially from movements of the load carrying vehicle, e.g. a truck or a dumper and the a load carrying body i.e. the tipping body.

In the following, the prior art will be described with reference to the accompanying drawings of Figures 1 to 2, of which:
Figure 1 shows a partial cross-sectional front view of one embodiment of a telescopic hydraulic cylinder according to prior art; and
Figure 2 shows a partial side view of one embodiment of a telescopic hydraulic cylinder according to prior art.

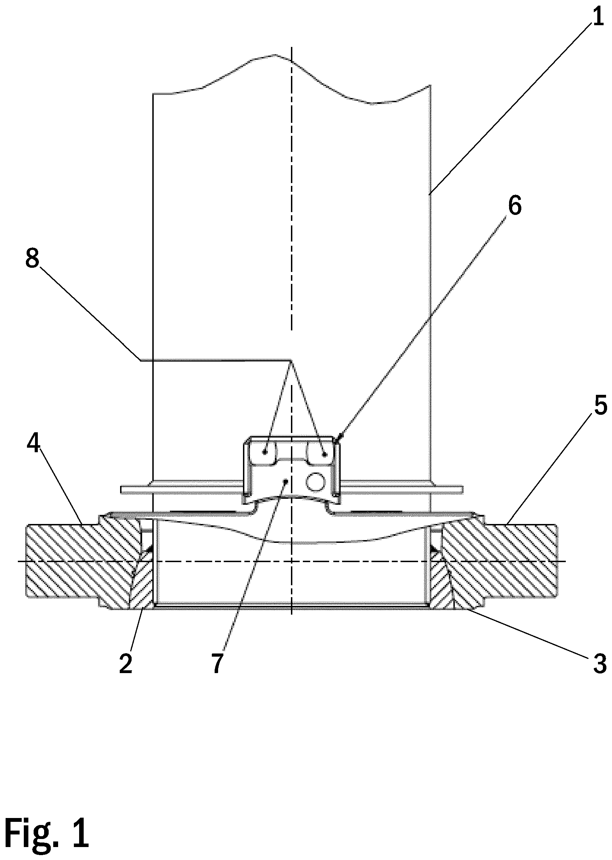

Figure 1 shows a partial cross-sectional front view of one embodiment of a telescopic hydraulic cylinder according to prior art. The presented embodiment of a telescopic hydraulic cylinder according to prior art has several sleeves nested within each other and a cover tube 1. The top part of the cover tube 1 is attached to the smallest inner sleeve of the telescopic hydraulic cylinder. The base of the cover tube 1 has a curved base ring 2 attached to the cover tube 1 e.g. by welding. The lower part of the cover tube 1 is provided with a fitting ring 3, which fitting ring 3 is fitted on top of the curved base ring 2 of the cover tube 1. The fitting ring 3 of the presented telescopic hydraulic cylinder according to prior art comprises fitting pins 4, 5 allowing the fitting and coupling of the fitting ring 3 to a tipping body, with the help of suitable coupling arrangement. The said tipping body can be e.g. a load carrying body of a truck or a dumper.

The presented telescopic hydraulic cylinder according to prior art has two steel boxes 6 in the lower part of the cover tube 1 in front and back. The said steel boxes 6 each contain a steel slide 7 and rubber springs 8. The steel slides 7 of the said steel boxes 6 lean on the fitting ring 3. Also the rubber springs 8 of the said steel boxes 6 provide some clamping power between the cover tube 1 and the fitting ring 3.

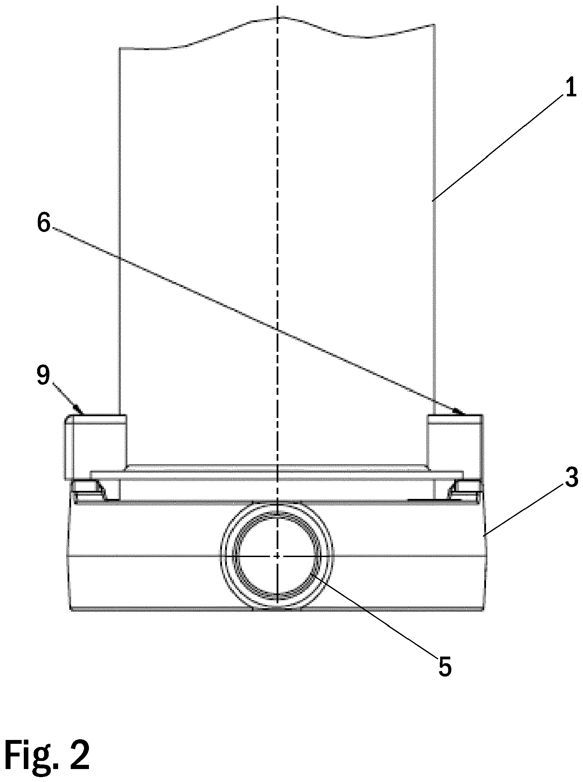

Figure 2 shows a partial side view of one embodiment of a telescopic hydraulic cylinder according to prior art. The presented embodiment of a telescopic hydraulic cylinder according to prior art has several sleeves nested within each other and a cover tube 1. The top part of the cover tube 1 is attached to the smallest inner sleeve of the telescopic hydraulic cylinder. The lower part of the cover tube 1 is provided with a fitting ring 3, which fitting ring 3 is fitted on top of a curved base ring of the cover tube 1. The fitting ring 3 of the presented telescopic hydraulic cylinder according to prior art comprises fitting pins 5 allowing the fitting and coupling of the fitting ring 3 to a tipping body. The presented telescopic hydraulic cylinder according to prior art has two steel boxes 6, 9 in the lower part of the cover tube 1 in front and back.

There are also some other prior art telescopic hydraulic cylinder solutions with a cover tube. In one prior art telescopic hydraulic cylinder solution the cover tube has been provided a welded steel ring. Said telescopic hydraulic cylinder also comprises a fitting ring, and with a thick rubber O-ring between said welded steel ring of the cover tube and said fitting ring, and further with a rubber seal on top of the said welded steel ring of the cover tube.

Another prior art telescopic hydraulic cylinder solution also comprises a cover tube and a fitting ring. In said another prior art solution there are provided bolts and cup springs to provide the tension between the cover tube and the fitting ring.

Furthermore, there is a European Patent application publication EP 2466156 A1 which discloses one typical prior art solution for a telescopic hydraulic cylinder with a cover tube and a fitting ring.

However, the problem with prior art telescopic hydraulic cylinder solutions is the securing of the cover tube so that the telescopic hydraulic cylinder solution can better withstand different forces, impacts, tensions, shear strains and stresses, twists and torsions resulting from the lifting operation and especially from movements of the load carrying vehicle, e.g. a truck or a dumper and the a load carrying body i.e. the tipping body.

In today's demanding environment, the manufacturers of telescopic hydraulic cylinders are constantly looking for improvements and cost savings in the hydraulic cylinder manufacturing. Likewise, there is also a demand in the market for a new type of a telescopic hydraulic cylinder and for a new type of a cover tube of a telescopic hydraulic cylinder with an improved securing of the cover tube when compared to the current prior art solutions.

### BRIEF DESCRIPTION OF THE INVENTION

An object of the present invention is thus to provide an apparatus so as to overcome the above problems and to alleviate the above disadvantages.

The objects of the invention are achieved by a cover tube assembly according to claim 1.

Preferably, the cylindrically curved upper surfaces of the said fitting ring securing elements are made of any kind of suitable sliding material, such as e.g. steel or bearing plastic or composite material or copper-plated steel.

Preferably, the said fitting ring securing elements are cylindrical in form or comprise cylindrical portion. Preferably, the fitting ring of said cover tube assembly comprises fitting pins allowing the fitting and coupling of the fitting ring to a tipping body.

Preferably, the fitting ring of said cover tube assembly comprises a seal ring.
Preferably, the fitting ring securing elements are fastened to the fitting ring with fastening elements.

Preferably, the fitting ring of said cover tube assembly comprises lubrication channels. Further preferably, the said fitting ring lubrication channels provide lubrication for the curved surface between the base ring and the fitting ring as well as provide lubrication for the cylindrically curved surface between the said securing elements and the base ring.

Furthermore, the objects of the invention are achieved by a telescopic hydraulic cylinder, said a telescopic hydraulic cylinder comprising several sleeves nested within each other and a cover tube assembly according to claim 1, the top part of which cover tube being attached to the smallest inner sleeve of the telescopic hydraulic cylinder, said cover tube assembly having a base ring attached to the cover tube, said base ring having a curved surface; and a fitting ring fitted on top of the base ring, said fitting ring having a curved surface matching with the curved surface of the base ring, in which said fitting ring of said cover tube assembly further comprises two securing elements having a cylindrically curved upper surface, and that said base ring having cylindrically curved surfaces matching with the cylindrically curved surfaces of the said securing elements.

### BRIEF DESCRIPTION OF THE DRAWINGS

Figure 1 shows a partial cross-sectional front view of one embodiment of a telescopic hydraulic cylinder according to prior art;
Figure 2 shows a partial side view of one embodiment of a telescopic hydraulic cylinder according to prior art;

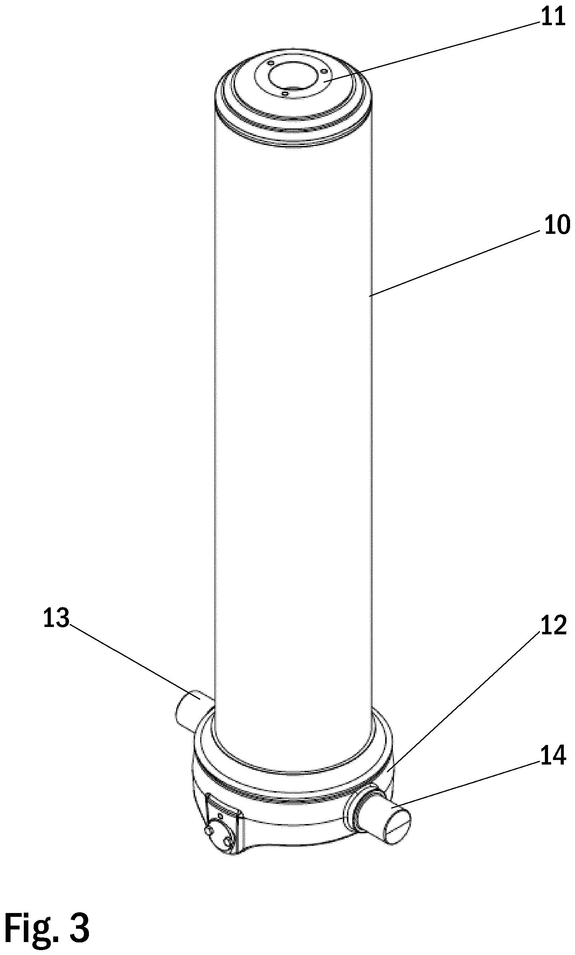

Figure 3 shows a perspective view of one embodiment of a telescopic hydraulic cylinder according to the present invention;

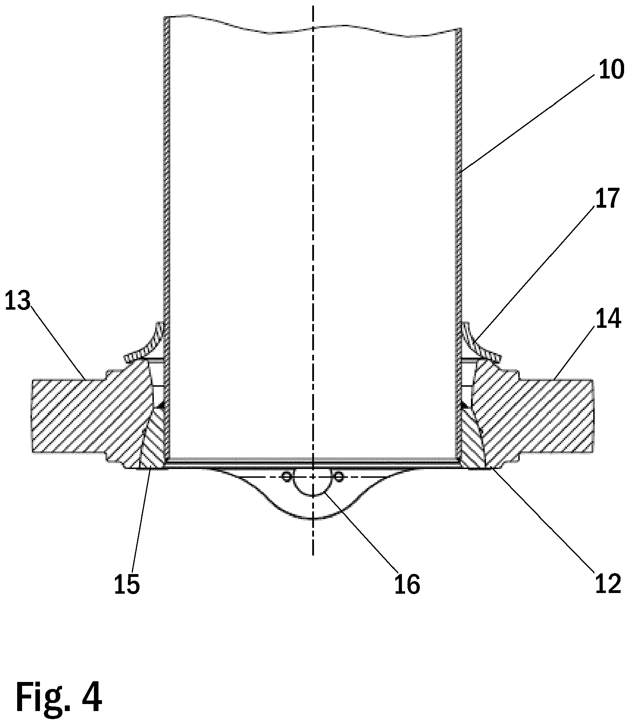

Figure 4 shows a partial cross-sectional front view of one embodiment of a telescopic hydraulic cylinder according to the present invention;

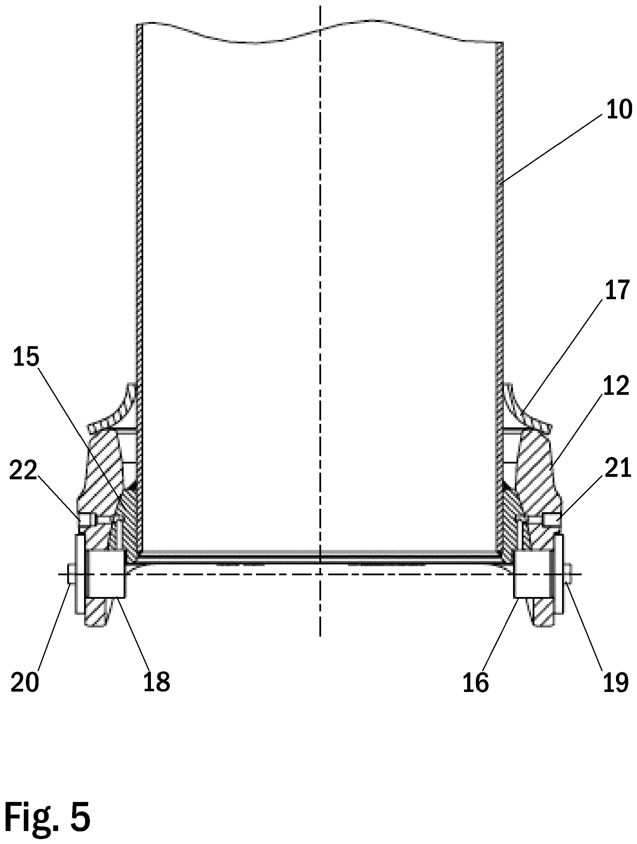

Figure 5 shows a partial cross-sectional side view of one embodiment of a telescopic hydraulic cylinder according to the present invention;

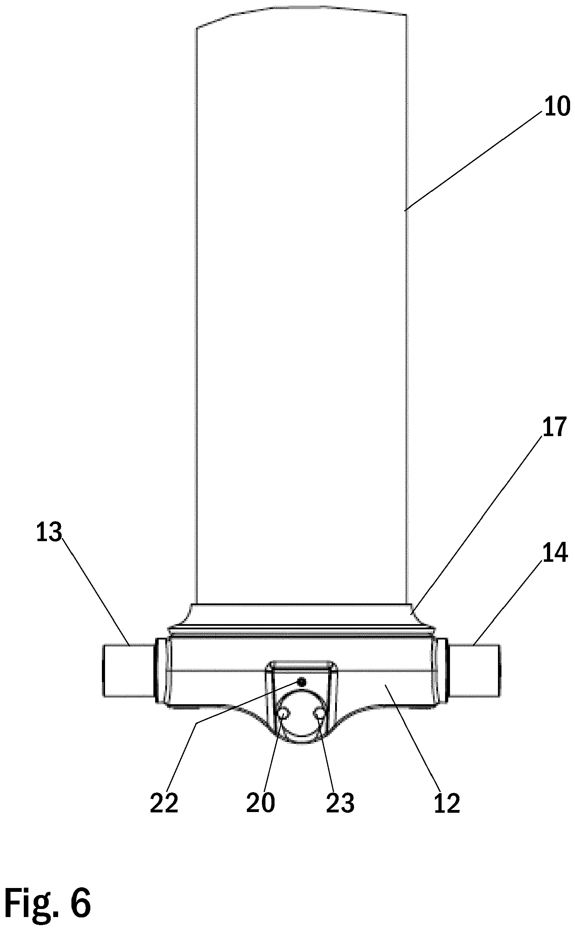

Figure 6 shows a partial front view of one embodiment of a telescopic hydraulic cylinder according to the present invention;

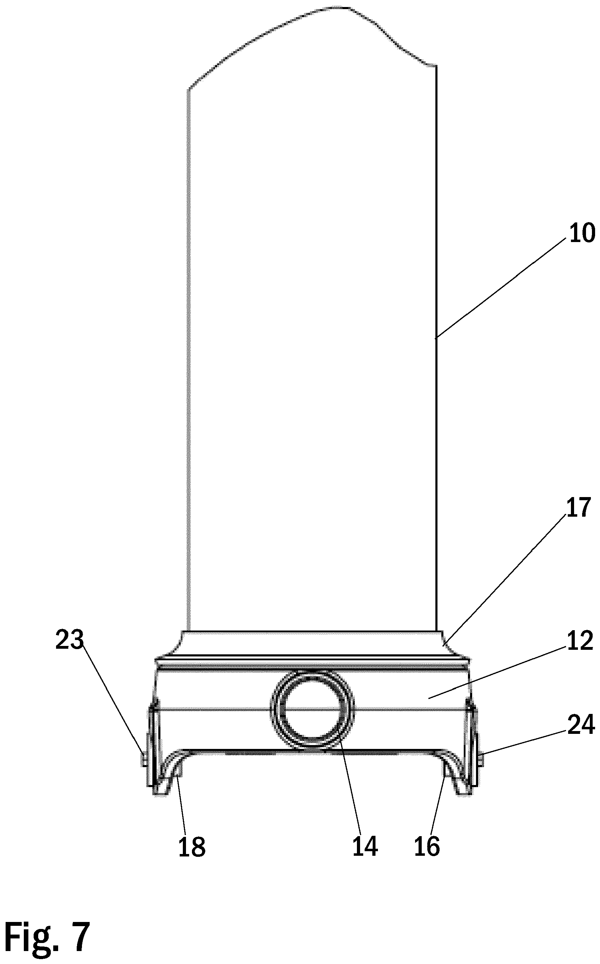

Figure 7 shows a partial side view of one embodiment of a telescopic hydraulic cylinder according to the present invention.

The prior art drawings of Figure 1 to 2 have been presented earlier. In the following, the invention will be described in greater detail by means of preferred embodiments with reference to the accompanying drawings of Figures 3 to 7. The Figures 3 to 7 refer to one single embodiment.

### DETAILED DESCRIPTION OF THE INVENTION

Figure 3 shows a perspective view of one embodiment of a telescopic hydraulic cylinder according to the present invention. The presented embodiment of a telescopic hydraulic cylinder according to the present invention has several sleeves nested within each other and a cover tube 10. The top part of the cover tube 10 is attached to the smallest inner sleeve of the telescopic hydraulic cylinder with help of a fastening arrangement 11. The base of the cover tube 10 has a curved base ring attached to the cover tube 10. The lower part of the cover tube 10 is provided with a fitting ring 12, which fitting ring 12 is fitted on top of the curved base ring of the cover tube 10. The fitting ring 12 of the presented telescopic hydraulic cylinder according to the present invention comprises fitting pins 13, 14 allowing the fitting and coupling of the fitting ring 12 to a tipping body, with the help of suitable coupling arrangement. The said tipping body can be e.g. a load carrying body of a truck or a dumper.

Figure 4 shows a partial cross-sectional front view of one embodiment of a telescopic hydraulic cylinder according to the present invention. The presented embodiment of a telescopic hydraulic cylinder according to the present invention has several sleeves nested within each other and a cover tube 10. The top part of the cover tube 10 is attached to the smallest inner sleeve of the telescopic hydraulic cylinder with help of a fastening arrangement. The base of the cover tube 10 has a base ring 15 having a curved surface, said base ring 15 attached to the cover tube 10 e.g. by welding. The lower part of the cover tube 10 is provided with a fitting ring 12, which fitting ring 12 is fitted on top of the base ring 15 of the cover tube 10. The fitting ring 12 has a curved surface so that as the fitting ring 12 is fitted on top of the base ring 15 the curved surface of the fitting ring 12 matches with the curved surface of the base ring 15. The fitting ring 12 of the presented telescopic hydraulic cylinder according to the present invention comprises fitting pins 13, 14 allowing the fitting and coupling of the fitting ring 12 to a tipping body, with the help of suitable coupling arrangement.

The fitting ring 12 of the cover tube 10 of the telescopic hydraulic cylinder according to the present invention is provided with two securing elements 16, one in the front and one in the back of the fitting ring 12. The securing elements 16 have a cylindrically curved upper surface. The said fitting ring securing elements 16 may be cylindrical in form or comprise cylindrical portion. The said fitting ring securing elements 16 may have the cylindrically curved upper surfaces i.e. the sliding surfaces made of any kind of suitable sliding material, such as e.g. steel or bearing plastic or composite material or copper-plated steel. The fitting ring 12 of the cover tube 10 may also comprise a rubber seal ring 17.

Figure 5 shows a partial cross-sectional side view of one embodiment of a telescopic hydraulic cylinder according to the present invention. The presented embodiment of a telescopic hydraulic cylinder according to the present invention has several sleeves nested within each other and a cover tube 10. The top part of the cover tube 10 is attached to the smallest inner sleeve of the telescopic hydraulic cylinder with help of a fastening arrangement. The base of the cover tube 10 has a base ring 15 having a curved surface, said base ring 15 attached to the cover tube 10 e.g. by welding. The lower part of the cover tube 10 is provided with a fitting ring 12, which fitting ring 12 is fitted on top of the base ring 15 of the cover tube 10. The fitting ring 12 has a curved surface so that as the fitting ring 12 is fitted on top of the base ring 15 the curved surface of the fitting ring 12 matches with the curved surface of the base ring 15.

The fitting ring 12 of the cover tube 10 of the telescopic hydraulic cylinder according to the present invention is provided with two securing elements 16, 18, one in the front and one in the back of the fitting ring 12. The securing elements 16, 18 have a cylindrically curved upper surface. Likewise the base ring 15 has cylindrically curved surfaces so that as the securing elements 16, 18 are fitted to the fitting ring 12 the cylindrically curved surfaces of the base ring 15 matches with the cylindrically curved surfaces of the securing elements 16, 18.

This allows the base ring 15 of the cover tube 10 to slide along the said cylindrically curved upper surface of the said securing elements 16, 18. The said fitting ring securing elements 16, 18 may be cylindrical in form or comprise cylindrical portion. The fitting ring 12 of the cover tube 10 may also comprise a seal ring 17, e.g. a rubber seal ring 17. The fitting ring securing elements 16, 18 may be fastened to the fitting ring 12 with fastening elements 19, 20. Said fastening elements 19, 20 may be any kind of suitable fastening elements, such as e.g. fastening bolts 19, 20. The fitting ring 12 of the cover tube 10 may also comprise lubrication channels 21, 22. The said fitting ring lubrication channels 21, 22 may provide lubrication for the curved surface between the base ring 15 and the fitting ring 12 as well as for the cylindrically curved surface between the said securing elements 16, 18 and the base ring 15.

Figure 6 shows a partial front view of one embodiment of a telescopic hydraulic cylinder according to the present invention. The presented embodiment of a telescopic hydraulic cylinder according to the present invention has several sleeves nested within each other and a cover tube 10. The top part of the cover tube 10 is attached to the smallest inner sleeve of the telescopic hydraulic cylinder with help of a fastening arrangement. The base of the cover tube 10 has a base ring having a curved surface, said base ring attached to the cover tube. The lower part of the cover tube 10 is provided with a fitting ring 12, which fitting ring 12 is fitted on top of the base ring of the cover tube 10. The fitting ring 12 of the presented telescopic hydraulic cylinder according to the present invention comprises fitting pins 13, 14 allowing the fitting and coupling of the fitting ring 12 to a tipping body, with the help of suitable coupling arrangement.

The fitting ring 12 of the cover tube 10 of the telescopic hydraulic cylinder according to the present invention is provided with two securing elements, one in the front and one in the back of the fitting ring 12. The fitting ring 12 of the cover tube 10 may also comprise a seal ring 17, e.g. a rubber seal ring 17. In the presented embodiment of a telescopic hydraulic cylinder according to the present invention said fitting ring securing elements are fastened to the fitting ring 12 with fastening elements 20, 23. Said fastening elements 20, 23 may be any kind of suitable fastening elements, such as e.g. fastening bolts 20, 23. The fitting ring 12 of the cover tube 10 may also comprise lubrication channels 22.

Figure 7 shows a partial side view of one embodiment of a telescopic hydraulic cylinder according to the present invention. The presented embodiment of a telescopic hydraulic cylinder according to the present invention has several sleeves nested within each other and a cover tube 10. The top part of the cover tube 10 is attached to the smallest inner sleeve of the telescopic hydraulic cylinder with help of a fastening arrangement. The base of the cover tube 10 has a base ring having a curved surface, said base ring attached to the cover tube. The lower part of the cover tube 10 is provided with a fitting ring 12, which fitting ring 12 is fitted on top of the base ring of the cover tube 10. The fitting ring 12 of the presented telescopic hydraulic cylinder according to the present invention comprises fitting pins 14 allowing the fitting and coupling of the fitting ring 12 to a tipping body, with the help of suitable coupling arrangement.

The fitting ring 12 of the cover tube 10 of the telescopic hydraulic cylinder according to the present invention is provided with two securing elements 16, 18, one in the front and one in the back of the fitting ring 12. The fitting ring 12 of the cover tube 10 may also comprise a seal ring 17, e.g. a rubber seal ring 17. In the presented embodiment of a telescopic hydraulic cylinder according to the present invention said fitting ring securing elements 16, 18 are fastened to the fitting ring 12 with fastening elements 23, 24. Said fastening elements 23, 24 may be any kind of suitable fastening elements, such as e.g. fastening bolts 23, 24.

With the help of the solution according to the present invention the manufacturers of telescopic hydraulic cylinders are able to provide a new type of a telescopic hydraulic cylinder and a new type of a cover tube of a telescopic hydraulic cylinder with an improved securing of the cover tube when compared to the current prior art solutions.

It will be obvious to a person skilled in the art that, as the technology advances, the inventive concept can be implemented in various ways. The invention and its embodiments are not limited to the examples described above but may vary within the scope of the claims.

## Claims

1. A cover tube assembly comprising a cover tube (10) for a telescopic hydraulic cylinder, a base ring (15) attached to the base of the cover tube (10), said base ring (15) having a curved surface; and a fitting ring (12) fitted on top of the base ring (15), said fitting ring (12) having a curved surface matching with the curved surface of the base ring (15),
**characterized in that** said fitting ring (12) of said cover tube assembly further comprises two securing elements (16), (18), each having a cylindrically curved upper surface, and that said base ring (15) having cylindrically curved surfaces matching with the cylindrically curved surfaces of the said securing elements (16), (18).

2. A cover tube assembly according to claim 1, **characterized in that** the cylindrically curved upper surfaces of the said fitting ring securing elements (16), (18) are made of any kind of suitable sliding material, such as e.g. steel or bearing plastic or composite material or copper-plated steel.

3. A cover tube assembly according to claim 1 or claim 2, **characterized in that** the said fitting ring securing elements (16), (18) are cylindrical in form or comprise cylindrical portion.

4. A cover tube assembly according to any one of claims 1 to 3, **characterized in that** the fitting ring (12) of said cover tube assembly comprises fitting pins (13), (14) allowing the fitting and coupling of the fitting ring (12) to a tipping body.

5. A cover tube assembly according to any one of claims 1 to 4, **characterized in that** the fitting ring (12) of said cover tube assembly comprises a seal ring (17).

6. A cover tube assembly according to any one of claims 1 to 5, **characterized in that** the fitting ring securing elements (16), (18) are fastened to the fitting ring (12) with fastening elements (19), (20), (23), (24).

7. A cover tube assembly according to any one of claims 1 to 6, **characterized in that** the fitting ring (12) of said cover tube assembly comprises lubrication channels (21), (22).

8. A cover tube assembly according to claim 7, **characterized in that** the said fitting ring lubrication channels (21), (22) provide lubrication for the curved surface between the base ring (15) and the fitting ring (12) as well as provide lubrication for the cylindrically curved surface between the said securing elements (16), (18) and the base ring (15).

9. A telescopic hydraulic cylinder, said a telescopic hydraulic cylinder comprising several sleeves nested within each other and a cover tube assembly according to claim 1, the top part of which cover tube (10) being attached to the smallest inner sleeve of the telescopic hydraulic cylinder.

## Patentansprüche

1. Abdeckrohranordnung, aufweisend ein Abdeckrohr (10) für einen teleskopischen Hydraulikzylinder, einen Basisring (15), der an der Basis des Abdeckrohrs (10) angebracht ist, wobei der Basisring (15) eine gekrümmte Oberfläche aufweist; und einen Passring (12), der oben auf dem Basisring (15) aufgesetzt ist, wobei der Passring (12) eine gekrümmte Oberfläche aufweist, die an die gekrümmte Oberfläche des Basisrings (15) angepasst ist, **dadurch gekennzeichnet, dass** der Passring (12) der Abdeckrohranordnung ferner zwei Sicherungselemente (16), (18) mit jeweils einer zylindrisch gekrümmten Oberseite aufweist, und der Basisring (15) zylindrisch gekrümmte Oberflächen hat, die an die zylindrisch gekrümmten Oberflächen der Sicherungselemente (16), (18) angepasst sind.

2. Abdeckrohranordnung nach Anspruch 1, **dadurch gekennzeichnet, dass** die zylindrisch gekrümmten Oberseiten der Passring-Sicherungselemente (16), (18) aus irgendeiner Art von geeignetem Gleitmaterial gefertigt sind, wie z.B. Stahl, Lagerkunststoff, Verbundmaterial oder verkupfertem Stahl.

3. Abdeckrohranordnung nach Anspruch 1 oder 2, **dadurch gekennzeichnet, dass** die Passring-Sicherungselemente (16), (18) eine zylindrische Form haben oder einen zylindrischen Abschnitt aufweisen.

4. Abdeckrohranordnung nach einem der Ansprüche 1 bis 3, **dadurch gekennzeichnet, dass** der Passring (12) der Abdeckrohranordnung Passstifte (13), (14) aufweist, die das Einpassen und Koppeln des Passrings (12) an einen Neigekörper ermöglichen.

5. Abdeckrohranordnung nach einem der Ansprüche 1 bis 4, **dadurch gekennzeichnet, dass** der Passring (12) der Abdeckrohranordnung einen Dichtring (17) aufweist.

6. Abdeckrohranordnung nach einem der Ansprüche 1 bis 5, **dadurch gekennzeichnet, dass** die Passring-Sicherungselemente (16), (18) mit Befestigungselementen (19), (20), (23), (24) an dem Befestigungsring (12) befestigt sind.

7. Abdeckrohranordnung nach einem der Ansprüche 1 bis 6, **dadurch gekennzeichnet, dass** der Passring (12) der Abdeckrohranordnung Schmierkanäle (21), (22) aufweist.

8. Abdeckrohranordnung nach Anspruch 7, **dadurch gekennzeichnet, dass** wobei die Passring-Schmierkanäle (21), (22) eine Schmierung für die gekrümmte Oberfläche zwischen dem Basisring (15) und dem Passring (12) sowie eine Schmierung für die zylindrisch gekrümmte Oberfläche zwischen den Befestigungselementen (16), (18) und dem Basisring (15) bewerkstelligen.

9. Teleskopischer Hydraulikzylinder, der mehrere ineinander verschachtelte Hülsen und eine Abdeckrohranordnung nach Anspruch 1 aufweist, wobei der obere Teil des Abdeckrohrs (10) an der kleinsten inneren Hülse des teleskopischen Hydraulikzylinders befestigt ist.

## Revendications

1. Ensemble tube de revêtement comprenant un tube de revêtement (10) pour un vérin hydraulique télescopique, une bague de base (15) attachée à la base du tube de revêtement (10), ladite bague de base (15) ayant une surface incurvée ; et une bague d'ajustement (12) ajustée en haut de la bague de base (15), ladite bague d'ajustement (12) ayant une surface incurvée concordant avec la surface incurvée de la bague de base (15), **caractérisé en ce que** ladite bague d'ajustement (12) dudit ensemble tube de revêtement comprend en outre deux éléments d'assujettissement (16), (18), ayant chacun une surface supérieure incurvée cylindriquement, et **en ce que** ladite bague de base (15) a des surfaces incurvées cylindriquement concordant avec les surfaces incurvées cylindriquement desdits éléments d'assujettissement (16), (18).

2. Ensemble tube de revêtement selon la revendication 1, **caractérisé en ce que** les surfaces supérieures incurvées cylindriquement desdits éléments d'assujettissement (16), (18) de bague d'ajustement sont constituées de toute sorte de matériau de coulissement adéquat, tel que, par exemple, de l'acier ou un matériau plastique ou composite antifriction ou de l'acier cuivré.

3. Ensemble tube de revêtement selon la revendication 1 ou la revendication 2, **caractérisé en ce que** lesdits éléments d'assujettissement (16), (18) de bague d'ajustement sont de forme cylindrique ou comprennent une portion cylindrique.

4. Ensemble tube de revêtement selon l'une quelconque des revendications 1 à 3, **caractérisé en ce que** la bague d'ajustement (12) dudit ensemble tube de revêtement comprend des pions d'ajustement (13), (14) permettant l'ajustement et le couplage de la bague d'ajustement (12) à un corps de basculement.

5. Ensemble tube de revêtement selon l'une quelconque des revendications 1 à 4, **caractérisé en ce que** la bague d'ajustement (12) dudit ensemble tube de revêtement comprend une bague d'étanchéité (17).

6. Ensemble tube de revêtement selon l'une quelconque des revendications 1 à 5, **caractérisé en ce que** les éléments d'assujettissement (16), (18) de bague d'ajustement sont fixés à la bague d'ajustement (12) avec des éléments de fixation (19), (20), (23), (24).

7. Ensemble tube de revêtement selon l'une quelconque des revendications 1 à 6, **caractérisé en ce que** la bague d'ajustement (12) dudit ensemble tube de revêtement comprend des canaux de lubrification (21), (22).

8. Ensemble tube de revêtement selon la revendication 7, **caractérisé en ce que** lesdits canaux de lubrification (21), (22) de bague d'ajustement assurent la lubrification de la surface incurvée entre la bague de base (15) et la bague d'ajustement (12) et assurent la lubrification de la surface incurvée cylindriquement entre lesdits éléments d'assujettissement (16), (18) et la bague de base (15).

9. Vérin hydraulique télescopique, ledit vérin hydraulique télescopique comprenant plusieurs manchons emboîtés les uns dans les autres et un ensemble tube de revêtement selon la revendication 1, tube de revêtement (10) dont la partie haute est attachée au manchon interne le plus petit du vérin hydraulique télescopique.
